# EUROPÄISCHE PATENTSCHRIFT

(11) **EP 1 052 141 B1**
(45) Veröffentlichungstag und Bekanntmachung des Hinweises auf die Patenterteilung: **06.10.2004**
(21) Anmeldenummer: 00109701.3
(22) Anmeldetag: 08.05.2000
(51) Int. Cl.: B60Q 1/04

(54) **Scheinwerfer für Fahrzeuge**
Headlamp for vehicle
Phare pour véhicule

(30) Priorität: 10.05.1999 DE 19921513
(43) Veröffentlichungstag der Anmeldung: 15.11.2000
(73) Patentinhaber: Hella KG Hueck & Co., 59552 Lippstadt (DE)
(72) Erfinder: Brummel, Reinhold, 59609 Anröchte (DE); Geesmeier, Andreas, 33098 Paderborn (DE); Kemper, Albert, 59597 Erwitte (DE); Ley, Peter, 59557 Lippstadt (DE); Mazziotti, Pietro Antonio, 59556 Lippstadt (DE); Meyer, Ernst-Otto, 59556 Lippstadt (DE); von Wuthenau, Alexander, 59597 Eriwitte (DE); Wiese, Gerwin, 59602 Rüthen (DE)

(56) Entgegenhaltungen:
- DE-A- 3 833 316
- DE-U- 29 512 359
- FR-A- 1 017 328
- GB-A- 1 201 141

## Beschreibung

Die Erfindung betrifft einen Scheinwerfer für Fahrzeuge nach dem Oberbegriff des Patentanspruchs 1.

Aus der DE 295 12 359 U1 ist ein Scheinwerfer für Fahrzeuge mit einem topfförmigen Gehäuse und einer dasselbe abdeckenden Abschlussscheibe bekannt, die einen aus einem Reflektor und einer Lampe bestehenden Scheinwerfereinsatz begrenzen. Zur Befestigung an einem Karosserieteil des Fahrzeugs ist eine Befestigungseinrichtung vorgesehen, die Bestandteil eines an den Scheinwerfer anlegbaren Halters ist. Der Halter weist ferner eine Feststelleinrichtung auf, mittels derer der Scheinwerfer bzw. der Scheinwerfereinsatz ausgerichtet werden kann. Der Halter ist an einem kugelförmigen Wandabschnitt des Gehäuses befestigbar.

Nachteilig an dem bekannten Scheinwerfer ist, dass der Halter relativ aufwändig ausgebildet ist. Es wird eine Dichtung benötigt, die zwischen dem Gehäuse und dem Halter angeordnet ist.

Aus der FR-A-1 017 328 ist ein Scheinwerfer für Fahrzeuge mit einem Gehäuse und einer Abschlussscheibe bekannt. Der bekannte Scheinwerfer weist eine Befestigungsvorrichtung zum Haltem des Scheinwerfers am Fahrzeug auf.

Aus der DE 38 33 316 A1 ist ein gattungsgemäßer Scheinwerfer für Fahrzeuge mit einem topfförmigen Gehäuse bekannt, der zum einen eine Befestigungseinrichtung zum Haltern des Scheinwerfers am Fahrzeug und der zum anderen eine Feststelleinrichtung zum Ausrichten des Scheinwerfers aufweist. Das Gehäuse weist eine Ausnehmung auf, so dass die Feststelleinrichtung unmittelbar mit einem Reflektor des Scheinwerfers verbindbar ist.

Aufgabe der Erfindung ist es, einen Scheinwerfer für Fahrzeuge derart weiterzubilden, dass zum einen der Aufbau des Scheinwerfers vereinfacht wird und zum anderen eine sichere Ver- und Feststellung des Scheinwerfereinsatzes gegeben ist.

Zur Lösung dieser Aufgabe weist die Erfindung die Merkmale des Patenanspruchs 1 auf.

Vorteilhaft ermöglicht der erfindungsgemäße Scheinwerfer durch die direkte Verbindung zwischen dem Halter einerseits und dem Reflektor andererseits eine Einsparung von Befestigungsmitteln. Es liegen somit weniger Befestigungspunkte vor, die den Anforderungen an die mechanische Beanspruchung, insbesondere an die Schwingungsbeanspruchung, standhalten müssen. Darüber hinaus bildet die Feststelleinrichtung eine dem Gehäuse vergleichbare Abdeckfunktion des Scheinwerfers. Während dem Gehäuse ausschließlich die Funktion des Schutzes vor Witterungseinflüssen zukommt bildet der Halter mit der Feststelleinrichtung eine tragende Funktion des Scheinwerfers. Erfindungsgemäß weist die Feststelleinrichtung eine kugelförmige Aufnahme auf, an die ein Teilbereich des Reflektors anlegbar und mit demselben verbindbar ist. Die Form der Aufnahme ist an die Form des Gehäuses angepasst und verschließt eine Öffnung oder Ausnehmung des Gehäuses dichtend.

Nach einer besonderen Ausführungsform der Erfindung weisen die Feststell- und Befestigungseinrichtung eine gemeinsame Symmetrieebene auf, die mit der vertikalen Mittelebene des Gehäuses bzw. des Reflektor zusammenfällt. Die zentrale Positionierung der Feststell- bzw. Befestigungseinrichtung ermöglicht eine Vereinfachung der Verstellung des Scheinwerfereinsatzes in verschiedenen Richtungen. Darüber hinaus ist eine stabile Halterung des Scheinwerfereinsatzes gewährleistet.

Nach einer Weiterbildung der Erfindung ist die kugelförmige Aufnahme der Feststelleinrichtung einstückig mit einem konkaven Bodenteil der Befestigungseinrichtung verbunden. Somit können die Teile auf einfache Weise, beispielsweise als Spritzgießteil, hergestellt werden.

Nach einer besonderen Ausführungsform der Erfindung schließt sich auf einer dem Gehäuse abgewandten Seite des Bodenteils ein Anlegeteil an, so daß der Scheinwerfer an einer ebenen Fläche des Fahrzeugs befestigt werden kann. Dadurch, daß das Bodenteil gewölbt oder im Querschnitt einen Kreisringausschnitt bildet, kann der Scheinwerfereinsatz zusätzlich in einer vertikalen Ebenen verstellt werden.

Ein Ausführungsbeispiel wird nachfolgend anhand der Zeichnungen näher erläutert.

Es zeigen:

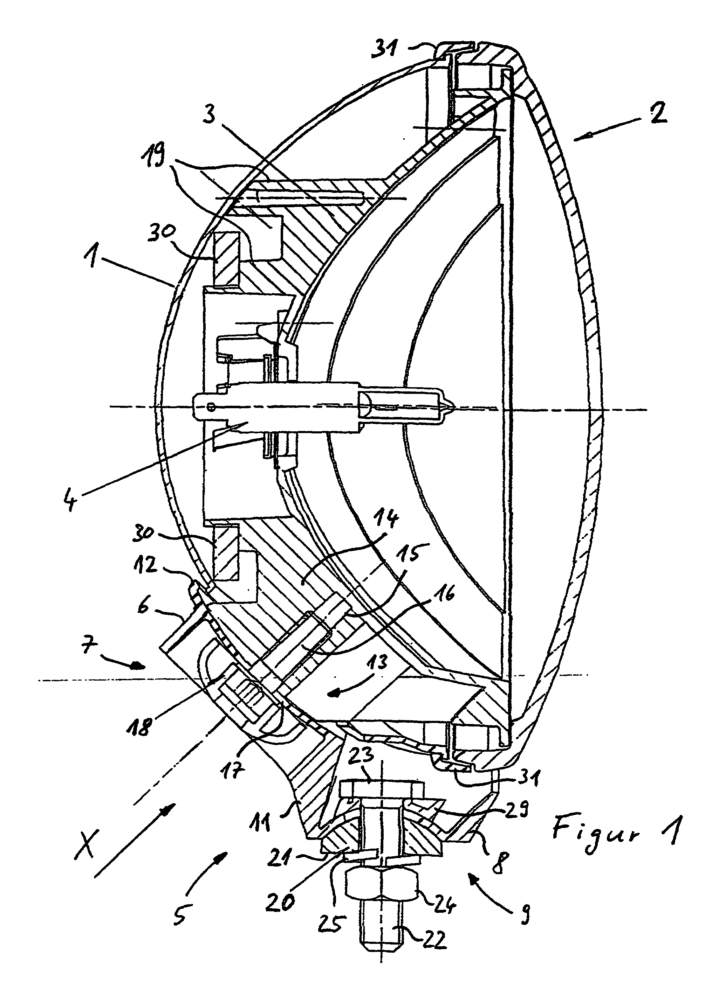

- Figur 1: einen Längsschnitt durch einen Scheinwerfer und

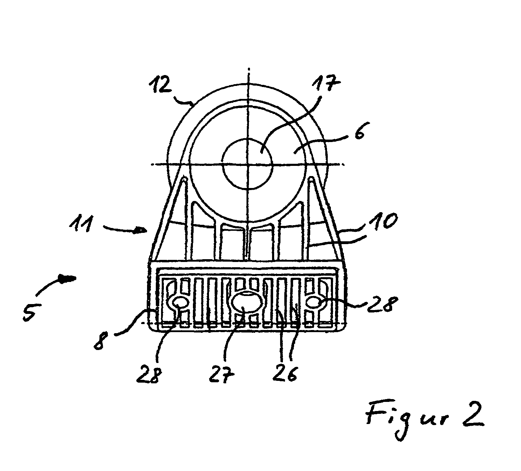

- Figur 2: eine Ansicht des Halters in Richtung X gemäß Figur 1.

Ein erfindungsgemäßer Scheinwerfer für Fahrzeuge besteht im wesentlichen aus einem topffömigen Gehäuse 1, einer das topfförmige Gehäuse abdeckenden Abschlußscheibe 2 und einem durch das Gehäuse 1 und die Abschlußscheibe 2 umfaßten Scheinwerfereinsatz, der durch einen Reflektor 3 und einer Lichtquelle 4 gebildet ist.

Der Scheinwerfer kann mittels eines Halters 5 zusätzlich zu einem Hauptscheinwerfer mit dem Fahrzeug lösbar verbunden werden. Die Befestigung des Scheinwerfers kann dabei stehend oder hängend erfolgen.

Der in dem vorliegenden Ausführungsbeispiel beschriebene Halter 5 besteht zum einen aus einer kugelförmigen Aufnahme 6, die Teil einer Feststelleinrichtung 7 ist, und zum anderen aus einem bogenförmigen Bodenteil 8, das Bestandteil einer Befestigungseinrichtung 9 ist. Der Halter 5 ist einstückig ausgebildet, wobei die Aufnahme 6 über ein mit Rippen 10 versehenes Versteifungsteil 11 mit dem Bodenteil 8 verbunden ist. Der Halter besteht aus einem glasfaserverstärktem Kunststoff und kann auf einfache Weise durch Spritzgießen hergestellt werden. Zur Halterung und Verstellung des Scheinwerfereinsatzes bezüglich des Halters 5 wird die kugelförmige Aufnahme 6 mit einem umlaufenden Rand 12 von außen derart an das Gehäuse 1 angelegt, daß eine Ausnehmung 13 des Gehäuses durch die Aufnahme 6 abgedeckt wird. Die Aufnahme 6 kommt dabei flächig mit einem Ansatz 14 des Reflektors 3 zur Anlage. Zur lösbaren Befestigung des Reflektors 3 an dem Halter 5 weist der Ansatz 14 eine Gewindebohrung 15 auf, in die ein Feststellbolzen 16 der Feststelleinrichtung 7 eingreifen kann.

Damit der Scheinwerfereinsatz bezüglich des Halters 5 in vertikaler und/ oder horizontaler Richtung zumindest in einem Winkelbereich von +/- 3° verstellbar ist, weist die Aufnahme 6 eine zentrale kreisrunde Verstellöffnung 17 auf, deren Durchmesser größer ist als der Durchmesser des Feststellbolzens 16. Der Feststellbolzen 16 ist somit zusammen mit dem Reflektor 3 in jegliche radiale Richtung um einen durch den Durchmesser der Verstellöffnung 17 vorgegebenen Winkel verstellbar angeordnet.

Der Feststellbolzen 16 weist auf einer dem Reflektor 3 abgewandten Endbereich einen Kopf 18 auf, der derart geformt ist, daß er sowohl manuell als auch mittels eines Schraubendrehers betätigt werden kann. Dadurch, daß der Reflektor 3 durch die aufgeklebte Abschlußscheibe 2 begrenzt ist und zum anderen sternfomig angeordnete radiale Rippen 19 aufweist, mittels derer er auf einer Innenseite des Gehäuses 1 anliegt, kann durch die mittels des Feststellbolzens 16 bewirkte Schraubverbindung zwischen dem Halter 5 und dem Reflektor 3 eine stabile Halterung des Scheinwerfers an dem Halter 5 gewährleistet sein. Der Kopf 18 weist in abstehende radiale Endabschnitte auf, die bei Verbringen der Feststelleinrichtung 7 in eine Feststellposition auf die Außenseite der Aufnahme 6 drücken und dieselbe klemmend mit dem Ansatz 14 des Reflektors 3 verbinden.

Der Halter 5 ist in einem unteren zentralen Bereich des Scheinwerfers angeordnet. Dabei weist der Halter 5 eine Symmetrieebene auf, die mit einer vertikalen Mittelebene des Scheinwerfereinsatzes bzw. des Reflektors zusammenfällt.

Über das mittels Rippen 10 verstärkte Versteifungsteil 11 ist die Aufnahme 6 mit dem Bodenteil 8 des Halters 5 verbunden, der zur Befestigung des Halters 5 an dem Fahrzeug dient. Durch die im Querschnitt kreisringausschnittförmige Ausbildung des Bodenteils 8 mit einer von dem Gehäuse 1 abgewandten konkaven Ausformung kann der Halter 5 an einem nicht dargestellten rohrförmigen Teil des Fahrzeugs befestigt werden. Zur Anlage an einem ebenen Teil der Karosserie des Fahrzeugs ist ein Anlegeteil 20 vorgesehen, das mit einer konvexen Wölbung auf einer der Gehäuse 1 abgewandten Seite des Bodenteils 4 an demselben und mit einer ebenen Basisfläche 21 an dem ebenen Teil der Karosserie anliegt. Zur lösbaren Befestigung des Bodenteils 8 an dem Fahrzeug ist eine Schraubverbindung vorgesehen mit einer Schraube 22, die mit einem Kopf 23 auf einer dem Gehäuse 1 zugewandten Seite des Bodenteils 8 festlegbar ist. Durch Verdrehen einer Mutter 24 kann das Bodenteil 8 mit dem Karosserieteil des Fahrzeugs kraftschlüssig verbunden werden. Ein Federring 25 dient zur Sicherung der Verbindung. Dadurch, daß das Bodenteil im Querschnitt bogenförmig ausgebildet ist, kann der Scheinwerfereinsatz zusammen mit dem Halter 5 zusätzlich um eine horizontale Achse verdreht und festgelegt werden, wobei der Verdrehwinkel bis maximal 10° betragen kann.

Das Bodenteil 8 weist eine Mehrzahl von parallel angeordneten Rippen 26 auf, die eine stabile Befestigung des Bodenteils 8 an dem Karosserieteil ermöglichen. Neben einer zentralen Öffnung 27 des Bodenteils 8, durch die die Schraube 22 durchführbar ist, sind zwei weitere Öffnungen 28 vorgesehen, die eine zusätzliche Schraubverbindung mit dem Karosserieteil ermöglichen. Nach dem vorliegenden Ausführungsbeispiel ist jedoch die Befestigung mittels einer einzigen Schraube 22 ausreichend.

Auf einer dem Gehäuse 1 zugewandten Seite des Bodenteils 8 ist ein Einlegeteil 29 angeordnet, so daß der Kopf 23 der Schraube 22 an eine ebene Fläche anlegbar ist. Alternativ kann das Bodenteil 8 auf der dem Gehäuse 1 zugewandten Seite eben ausgebildet sein, so daß auf das Vorsehen des Einlegeteils 29 verzichtet werden kann.

In einem axialnahen Bereich des Reflektors 3 liegt dieser über eine Dichtung 30 an der Innenseite des Gehäuses 1 an. Diese Dichtung 30 verhindert, daß Kondenswasser in den Bereich der Lichtquelle 4 gelangen kann. In einem Randbereich des Gehäuses 1 ist ein Zierrahmen 31 vorgesehen, der mittels zwei nicht dargestellter Schrauben an dem Reflektor 3 befestigt ist. Hierdurch wird das Gehäuse 1 in einer vorgegebenen Lage zu dem Reflektor 3 gehalten.

## Patentansprüche

1. Scheinwerfer für Fahrzeuge mit einem topfförmigen Gehäuse (1), mit einer das topfförmige Gehäuse (1) abdeckenden Abschlussscheibe (2), mit einem in dem durch das topfförmige Gehäuse (1) und der Abschlussscheibe (2) begrenzten Innenraum angeordneten Reflektor (3) und einer Lichtquelle (4) sowie einem Halter (5), der zum einen eine Befestigungseinrichtung (9) zum Haltern des Scheinwerfers am Fahrzeug und der zum anderen eine Feststelleinrichtung (7) zum Ausrichten des Scheinwerfers aufweist, wobei das Gehäuse (1) eine Ausnehmung (13) aufweist, so dass die Feststelleinrichtung (7) unmittelbar mit dem Reflektor (3) verbindbar ist, **dadurch gekennzeichnet, dass** die Feststelleinrichtung (7) eine kugelförmige Aufnahme (6) aufweist mit einer zentralen Verstellöffnung (17), in die ein Feststellbolzen (16) durchsteckbar ist, der in Eingriff mit der Gewindebohrung (15) des Reflektors (3) bringbar ist.

2. Scheinwerfer nach Anspruch 1, **dadurch gekennzeichnet, dass** die Feststelleinrichtung (7) und die Befestigungseinrichtung (9) eine gemeinsame Symmetrieebene aufweisen, die mit einer vertikalen Mittelebene des Gehäuses (1) und/oder des Reflektors (3) zusammenfällt.

3. Scheinwerfer nach Anspruch 1 oder 2, **dadurch gekennzeichnet, dass** die Verstellöffnung (17) der Aufnahme (6) eine solche Ausdehnung aufweist, dass der Reflektor (3) um einen Verstellwinkel von zumindest +/- 3° bezüglich der Aufnahme (6) bewegbar ist.

4. Scheinwerfer nach einem der Ansprüche 1 bis 3, **dadurch gekennzeichnet, dass** der Feststellbolzen (16) einen Kopf (18) mit radialen Endabschnitten aufweist, die klemmend an einer Außenseite der Aufnahme (6) anlegbar sind.

5. Scheinwerfer nach einem der Ansprüche 1 bis 4, **dadurch gekennzeichnet, dass** die Befestigungsvorrichtung (9) ein konkaves Bodenteil (8) mit einer Öffnung (27) aufweist und dass das Bodenteil (8) einstückig mit der Aufnahme (6) verbunden ist.

6. Scheinwerfer nach Anspruch 5, **dadurch gekennzeichnet, dass** das Bodenteil (8) über ein mit Rippen (10) versehenes Versteifungsteil (11) mit der Aufnahme (6) verbunden ist.

7. Scheinwerfer nach einem der Ansprüche 5 bis 6, **dadurch gekennzeichnet, dass** das Bodenteil (8) beabstandet von dem Gehäuse (1) angeordnet ist und dass auf einer dem Gehäuse (1) abgewandten Seite des Bodenteils (8) ein mit einer ebenen Basisfläche (21) ausgebildetes Anlegeteil (20) anlegbar ist zum Befestigen des Scheinwerfers an einer ebene Fläche des Fahrzeugs.

8. Scheinwerfer nach einem der Ansprüche 5 bis 7, **dadurch gekennzeichnet, dass** das Bodenteil (8) eine Mehrzahl von parallelen Rippen (26) aufweist.

9. Scheinwerfer nach einem der Ansprüche 1 bis 8, **dadurch gekennzeichnet, dass** der Halter (5) aus einem glasfaserverstärktem Kunststoffmaterial besteht.

## Claims

1. Vehicle headlamp, comprising a dished housing (1), a closing plate (2) covering the dished housing (1), a reflector (3) arranged in the cavity delimited by the dished housing (1) and the closing plate (2), a light source (4) and a bracket (5) which includes, firstly, a mounting arrangement (9) for mounting the headlamp on the vehicle and, secondly, a fixing arrangement (7) for aligning the headlamp, the housing (1) having an opening (13) so that the fixing arrangement (7) is directly connectable to the reflector (3), **characterised in that** the fixing arrangement (7) includes a spherical receptacle (6) having a central adjustment aperture (17) through which a fixing pin (16) which can be brought into engagement with the threaded bore (15) of the reflector (3) is insertable.

2. Headlamp according to claim 1, **characterised in that** the fixing arrangement (7) and the mounting arrangement (9) have a common plane of symmetry which coincides with a vertical centre plane of the housing (1) and/or of the reflector (3).

3. Headlamp according to claim 1 or 2, **characterised in that** the adjustment aperture (17) of the receptacle (6) has an extension such that the reflector (3) is movable through an adjustment angle of at least ± 3° with respect to the receptacle (6).

4. Headlamp according to any one of claims 1 to 3, **characterised in that** the fixing pin (16) has a head (18) having radial end portions which can be applied in a clamping manner against an outer face of the receptacle (6).

5. Headlamp according to any one of claims 1 to 4, **characterised in that** the fixing arrangement (9) has a concave base portion (8) having an aperture (27) and **in that** the base portion (8) is integrally connected to the receptacle (6).

6. Headlamp according to claim 5, **characterised in that** the base portion (8) is connected to the receptacle (6) via a stiffening portion (11) provided with ribs (10).

7. Headlamp according to either of claims 5 and 6, **characterised in that** the base portion (8) is arranged at a distance from the housing (1) and **in that** a mounting part (20) having a flat base surface (21) can be applied to a side of the base portion (8) facing away from the housing (1) for mounting the headlamp to a flat surface of the vehicle.

8. Headlamp according to any one of claims 5 to 7, **characterised in that** the base portion (8) has a plurality of parallel ribs (26).

9. Headlamp according to any one of claims 1 to 8, **characterised in that** the bracket (5) is made of a glassfibre-reinforced plastics material.

## Revendications

1. Phare pour véhicules automobiles, comportant un boîtier en forme de coupelle (1), une plaque de fermeture (2) qui recouvre le boîtier en forme de coupelle (1), un réflecteur (3) disposé dans l'espace intérieur limité par le boîtier en forme de coupelle (1) et la plaque de fermeture (2), et une source de lumière (4) ainsi qu'un dispositif de retenue (5), qui comporte d'une part un dispositif de fixation (9) servant à retenir le phare sur le véhicule, et d'autre part un dispositif de blocage (7) pour orienter le phare, le boîtier (1) comportant un évidement (13) de sorte que le dispositif de blocage (7) peut être relié directement au réflecteur (3), **caractérisé en ce que** le dispositif de blocage (7) comporte un logement de forme sphérique (6), comprenant une ouverture centrale de réglage (17), dans laquelle peut être enfiché un boulon de blocage (16), qui peut être amené à engrener avec le perçage taraudé (15) du réflecteur (3).

2. Phare selon la revendication 1, **caractérisé en ce que** le dispositif de blocage (7) et le dispositif de fixation (9) possèdent un plan de symétrie commun, qui coïncide avec un plan central vertical du boîtier (1) et/ou du réflecteur (3).

3. Phare selon la revendication 1 ou 2, **caractérisé en ce que** l'ouverture de réglage (17) du logement (6) possède une étendue telle que le réflecteur (3) est déplaçable sur un angle de réglage d'au moins +/-3° par rapport au logement (6).

4. Phare selon l'une des revendications 1 à 3, **caractérisé en ce que** le boulon de blocage (7) comporte une tête (18) possédant des sections d'extrémité radiales, qui peuvent être appliquées avec serrage contre une face extérieure du logement (6).

5. Phare selon l'une des revendications 1 à 4, **caractérisé en ce que** le dispositif de fixation (9) comporte une partie de base concave (8) possédant une ouverture (27) et que le partie de base (8) est reliée d'un seul tenant au logement (6).

6. Phare selon la revendication 5, **caractérisé en ce que** la partie de base (8) est reliée au logement (6) par l'intermédiaire d'une partie de rigidification (11) pourvue de nervures (10).

7. Phare selon l'une des revendications 5 et 6, **caractérisé en ce que** la partie de base (8) est disposée à distance du boîtier (1) et que sur un côté de la partie de base (8) tourné à l'opposé du boîtier (1) peut être fixée une partie d'application (20), qui est réalisée avec une surface de base plane (21) et sert à fixer le phare sur une surface plane du véhicule.

8. Phare selon l'une des revendications 5 à 7, **caractérisé en ce que** la partie de base (8) comporte une multiplicité de nervures parallèles (26).

9. Phare selon l'une des revendications 1 à 8, **caractérisé en ce que** le dispositif de retenue (5) est constitué par une matière plastique renforcée par des fibres de verre.
